# EUROPÄISCHE PATENTSCHRIFT

(11) **EP 2 292 960 B1**
(45) Veröffentlichungstag und Bekanntmachung des Hinweises auf die Patenterteilung: **03.08.2011**
(21) Anmeldenummer: 10015273.5
(22) Anmeldetag: 20.12.2007
(51) Int. Cl.: F16L 1/028, E21B 7/20, E02F 5/10

(54) **Bohrvorrichtung zur Verlegung von Rohrleitungen im Boden**
Drilling device for laying pipes in the ground
Dispositif de forage pour la pose de conduites dans le sol

(30) Priorität: 29.12.2006 DE 102006062098
(43) Veröffentlichungstag der Anmeldung: 09.03.2011
(62) Teilanmeldung aus: 07857021.5
(73) Patentinhaber: Herrenknecht AG, 77963 Schwanau (DE)
(72) Erfinder: Kögler, Rüdiger, 26670 Nordgeorgsfehn (DE)
(74) Vertreter: Wetzel, Philipp

(56) Entgegenhaltungen:
- EP-A- 0 345 945
- EP-A- 1 167 681
- WO-A-93/12366
- US-A- 3 011 278
- US-A- 4 448 567
- US-A- 4 650 370
- US-A1- 2002 066 214
- US-B1- 6 183 163

## Beschreibung

Die vorliegende Erfindung betrifft eine Bohrvorrichtung zur Verlegung von Rohrleitungen im Boden, nach dem Oberbegriff von Anspruch 1 (WO 93/12366 A1).

### Stand der Technik

Die Verlegung von Rohrleitungen (Pipelines) im Boden hat sich seit Jahrzehnten praktisch nicht verändert. In der Regel wird zunächst der Mutterboden abgetragen und seitlich gelagert, dann werden die zu verlegenden Rohre in Einzellängen von ca. 12 - 16 m in die Trasse ausgefahren, dort miteinander verschweißt und die Nahtstellen gegen Korrosion umhüllt. Danach wird - falls erforderlich - eine Grundwasserabsenkung durchgeführt und anschließend der Rohrgraben ausgehoben. Im nächsten Arbeitsschritt werden die verschweißten Rohrstränge durch so genannte Seitenbäume oder Seilbagger angehoben und in den Rohrgraben abgesenkt. Häufig wird dann zusätzlich zu dem Produktrohr (z.B. für den Öl- oder Gastransport) ein so genanntes Kabelschutzrohr im gleichen Rohrgraben verlegt, in das später Steuer- und Signalkabel zur Überwachung der Pipeline eingezogen werden. In einem weiteren Arbeitsschritt wird die Grundwasserhaltung zurückgebaut, danach kann der Rohrgraben verfüllt werden. Abschließend wird der Mutterboden wieder aufgetragen und die Trasse rekultiviert.

Der geschilderte Arbeitsablauf ist zeit- und kostenintensiv und ist neben massiven Eingriffen in die Natur (Zerstörung des Bodenaufbaus, Grundwasserabsenkung, Emissionen durch intensiven Maschineneinsatz) auch mit erheblichen Gefahren für die dort eingesetzten Arbeiter verbunden (schwebende Lasten, Arbeiten in Rohrgraben etc.).

Bei kleineren Rohrleitungen (Durchmesser < 400 mm) lässt sich der maschinentechnische Aufwand in der Regel auf kleinere Baumaschinen (Rad- oder Kettenbagger, Schweißgeräte auf PKW-Anhängern etc.) beschränken. Für diese kleineren Rohrleitungsdurchmesser setzt sich auch zunehmend eine "halb-offene" Verlegung durch, bei der die Rohrleitung mittels spezieller Pflüge in den Boden eingebracht wird. Für diese aus ökologischer Sicht vorteilhafte Methode gibt es jedoch Begrenzungen hinsichtlich des maximalen Außendurchmessers (z.Z. < 400 mm) und des Rohrmaterials (geeignet sind z.B. PE und Guss, nicht bzw. nur eingeschränkt einsetzbar sind Stahlrohre, da sie nur größere elastischen Krümmungsradien zulassen).

Bei der Verlegung großer (Stahl)-Rohrleitungen (Durchmesser > 400 mm) ist der intensive Einsatz von großen Erdbewegungsmaschinen (Bagger, Raupe, Radlader), mobilen Schweißstationen (Schweißraupen, Schweißunimogs etc.) sowie von schweren Geräten zum Bewegen der Einzelrohre bzw. der verschweißten Rohrstränge (Lastkraftwagen, Seitenbäume, Seilbagger) erforderlich. Hiermit verbunden sind entsprechende Auswirkungen auf die Umwelt, was gerade in der heutigen Zeit zunehmend schon während der Genehmigungsphase von Pipelineprojekten zu großen Problemen führen kann und des weiteren während der Bauausführung oftmals zu einer geringen Akzeptanz bei den betroffenen Anwohnern oder Grundstückseigentümern führt (z.B. Landwirte).

Neben den geschilderten Bauverfahren im offenen Rohrgraben bzw. im halboffenen Verfahren werden in ökologisch besonders sensiblen Trassenabschnitten heute zu Tage häufig auch grabenlose Bauweisen wie die Horizontalbohrtechnik oder der Rohrvortrieb eingesetzt. Diese sind jedoch in der Regel wesentlich zeit- und kostenintensiver als die konventionellen Verlegemethoden, so dass der Einsatz dieser Techniken auf ganz spezielle Trassenabschnitte beschränkt bleibt. Darüber hinaus gibt es für diese Bauweisen auch besondere technische Restriktionen zum Beispiel hinsichtlich des Baugrunds oder der Bohrungslänge.

### Technische Aufgabe

Der vorliegenden Erfindung liegt deshalb die Aufgabe zu Grunde, eine Bohrvorrichtung zu entwickeln, bei deren Einsatz die Verlegung großer (> 400 mm) Rohrleitungen (auch aus Stahl) mit geringer Beeinträchtigung der Umwelt und hoher Arbeitssicherheit für das eingesetzte Personal bei gleichzeitig großer Verlegeleistung (Zeit- und Kostenvorteil) ermöglicht wird.

### Lösung der technischen Aufgabe

Diese Aufgabe wird gelöst durch eine Bohrvorrichtung mit den Merkmalen des Anspruchs 1. Der Anspruch 12 betrifft ein bei der Bohrvorrichtung ausgestattetes Verlegefahrzeug. Vorteilhafte Ausgestaltungen der Erfindung ergeben sich aus den Unteransprüchen.

Ein an der Geländeoberfläche befindliches Verlegefahrzeug ist mit einem im Boden befindlichen Bohrkopf über eine vertikale Verbindungsvorrichtung mit den erforderlichen Steuer- und Versorgungsleitungen verbunden. Sobald sich das Verlegefahrzeug in Trassenrichtung bewegt, wird von der vertikalen Verbindungsvorrichtung - deren Aufbau in weichen Böden etwa demjenigen der Kabelpflüge entspricht und in felsigen Böden zusätzlich eine Fräskette wie z.B. bei Grabenfräsen vorsieht - lediglich ein schmaler Schlitz von etwa 100 - 200 mm Breite erstellt. Gleichzeitig wird vom Bohrkopf ein Bohrloch erstellt, das heißt der anstehende Boden wird gelöst und (vorzugsweise ebenfalls durch die vertikale Verbindungsvorrichtung) nach Übertage gefördert. Der Durchmesser des Bohrkopfes ist geringfügig größer als derjenige der zu verlegenden Rohrleitung und kann dabei bis zu 1.500 mm Durchmesser und mehr aufweisen.

Zur Überwindung der während des Bohr- und Verlegevorgangs auftretenden Kräfte (z.B. Andruckkraft für Bohrkopf, Reibungskräfte an der Rohrleitung etc.) wird das Verlegefahrzeug - ggf. in Koppelung mit weiteren Zugfahrzeugen - und/oder eine Vorschubeinrichtung in der Startgrube eingesetzt. Bei letzterer handelt es sich vorzugsweise um eine auch als Pipe Thruster bekannte Maschine, die von außen über Reibschluss Vorschubkräfte auf eine Rohrleitung übertragen kann, ohne dabei die Umhüllung der Rohrleitung zu zerstören.

Die exakte Steuerung des Bohrkopfes und damit die endgültige Position der Rohrleitung im Boden können auf mehrere Arten erfolgen. Zum Einen kann die vertikale Verbindungsvorrichtung über entsprechende Vorrichtungen mit dem Verlegefahrzeug verbunden sein (ähnlich den Aufreißern an Raupen oder den Auslegern von Baggern), so dass kontrollierte Steuerimpulse über die vertikale Verbindungsvorrichtung direkt auf den Bohrkopf übertragen werden können, wodurch dessen Position im Boden in dreidimensionaler Weise geändert werden kann. Zum Anderen können in einer bevorzugten Ausführungsvariante im Bohrkopf Steuerzylinder angebracht werden, die direkt eine Richtungsänderung des Bohrkopfes - analog der Steuerung von Rohrvortriebsmaschinen - durchführen können.

Die exakte Position des Verlegefahrzeugs kann entweder über GPS erfolgen oder aber auch mittels Lasersystemen, wie sie auch heute schon bei Erdarbeiten eingesetzt werden.

### Vorteile der Erfindung

Die wesentlichen Vorteile gegenüber der konventionellen Rohrverlegung im offenen Rohrgraben sind:
- minimale Beeinträchtigung der Umwelt
   - kleinstmögliche Trassenbreite und somit geringstmöglicher Landverbrauch
   - fast vollständiger Entfall von Grundwasserabsenkungsmaßnahmen (lediglich punktuell im Bereich der Baugruben erforderlich)
   - geringe Emissionen (Lärm, Abgase) durch verminderten Maschineneinsatz
   - keine Zerstörung des natürlichen Bodenaufbaus (Schichtung)
   - minimale Erdbewegungsarbeiten (lediglich Abfuhr des Bohrlochvolumens erforderlich)
   - keine Hindernisse für die Fauna im Trassenbereich (z.B. in Form des Rohrgrabens und des Bodenaushubs)
- optimierter Arbeitsschutz
   - keine Arbeiten in Rohrgräben erforderlich
   - keine Arbeiten unter schwebenden Lasten erforderlich (z.B. beim konventionellen Absenken des Rohrstrangs in den Rohrgraben)
- hohe Akzeptanz bei den Betroffenen Anwohnern
   - schnelle Verlegung und damit kurzer Beeinträchtigungszeitraum
   - geringe physische Beeinträchtigung der betroffenen Grundstücke
   - geringe Emissionen (Lärm, Abgase)
- verbesserte Wirtschaftlichkeit
   - hohe Verlegeleistung bei gleichzeitig verringertem Maschinen- und Personaleinsatz und weniger "Nebenteistungen" (z.B. geringere Nutzungsgebühren für den Arbeitsstreifen wegen verringerter Trassenbreite etc.)
   - geringerer Investitionsbedarf wegen verkleinertem Maschinenpark Die wesentlichen Vorteile gegenüber der halboffenen Rohrverlegung mittels Pflug (in verdrängunsgfähigem Boden) sind:
- Erweiterung des technischen Einsatzspektrums
   - Verlegung auch großer (Stahl)-Rohre (> 400 mm) möglich
   - Einsatz auch in felsigem Boden möglich

Die wesentlichen Vorteile gegenüber der halboffenen Rohrverlegung mittels Grabenfräse (in Fels) sind:
- minimale Beeinträchtigung der Umwelt
   - geringe Emissionen (Lärm, Abgase) durch verminderten Maschineneinsatz
   - keine Zerstörung des natürlichen Bodenaufbaus (Schichtung)
   - minimale Erdbewegungsarbeiten (lediglich Abfuhr des Bohrlochvolumens erforderlich)
   - keine Hindernisse für die Fauna im Trassenbereich (z.B. in Form des Rohrgrabens und des Bodenaushubs)
- optimierter Arbeitsschutz
   - keine Arbeiten in Rohrgräben erforderlich
   - keine Arbeiten unter schwebenden Lasten erforderlich (z.B. beim konventionellen Absenken des Rohrstrangs in den Rohrgraben)
- hohe Akzeptanz bei den Betroffenen Anwohnern
   - schnelle Verlegung und damit kurzer Beeinträchtigungszeitraum
   - geringe physische Beeinträchtigung der betroffenen Grundstücke
   - geringe Emissionen (Lärm, Abgase)
- verbesserte Wirtschaftlichkeit
   - hohe Verlegeleistung bei gleichzeitig verringertem Maschinen- und Personaleinsatz und weniger "Nebenleistungen" (z.B. geringere Nutzungsgebühren für den Arbeitsstreifen wegen verringerter Trassenbreite etc.)
   - geringerer Investitionsbedarf wegen verkleinertem Maschinenpark Zeichnungen

Das Verfahren sowie dabei einsetzbare Vorrichtungen werden anhand von Zeichnungen dargestellt und nachfolgend erläutert, wobei die dort gezeigten Merkmale beispielhaften Charakter aufweisen. Die Zeichnungen zeigen:
- Fig. 1a- 1f:: Beispielhafter Einsatz des Verfahrens zur Verlegung einer in einem Stück vorbereiteten Rohrleitung in einfachen Bodenverhältnissen.
- Fig. 2a - 2e:: Beispielhafter Einsatz des Verfahrens zur Verlegung einer aus Einzelrohren während der Verlegung montierten Rohrleitung in einfachen Bodenverhältnissen.
- Fig. 3a - 3g:: Beispielhafter Einsatz des Verfahrens zur Verlegung einer aus Einzelrohren während der Verlegung montierten Rohrleitung in schwierigen Bodenverhältnissen.
- Fig. 4a - 4b:: Beispielhafte Darstellung der beim Einsatz des Verfahrens einsetzbaren Vorrichtungen bei gleichzeitiger Verlegung eines Kabelschutzrohrs.
- Fig. 5a - 5b:: Beispielhafte Darstellung der unterschiedlichen Trassenbreiten bei Einsatz des konventionellen Verlegeverfahrens im offenen Rohrgraben sowie des erfindungsgemäßen Verfahrens.

### Ausführungsbeispiele

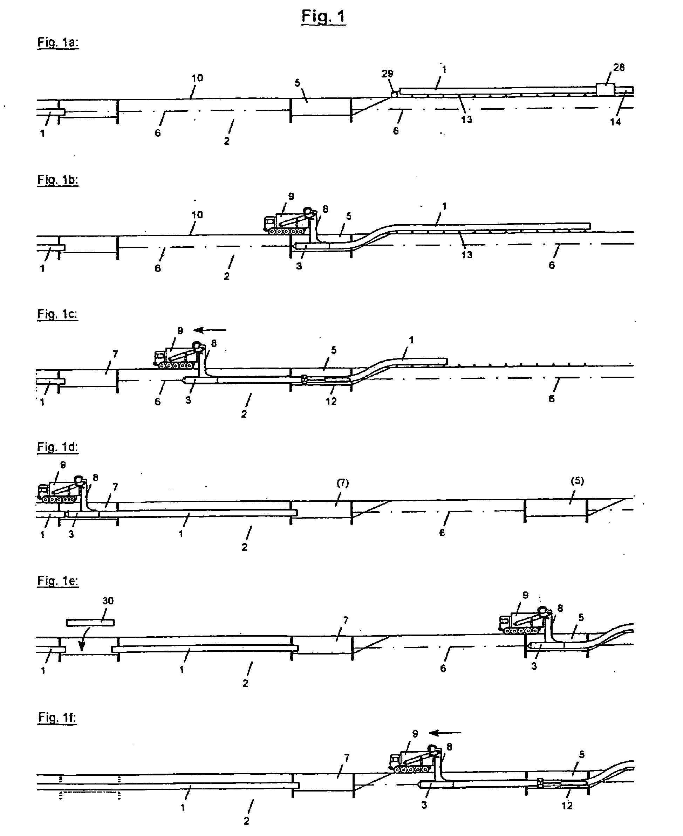

In Fig. 1 ist die prinzipielle Einsatzmöglichkeit des Verfahrens sowie dabei einsetzbarer Vorrichtungen gezeigt, wobei diese Variante vorzugsweise dann zum Einsatz kommen soll, wenn eine hohe Bohrgeschwindigkeit wegen günstiger Bodenbedingungen erreicht werden kann und die für die Verlegung vorgesehenen Rohre lange Koppelungszeiten erforderlich machen. Diese Konstellation ergibt sich beispielsweise bei der Verlegung großer, dickwandiger Stahlrohre in sandigem Boden.
   Fig. 1a: Zunächst wird die Rohrleitung 1 an der Geländeoberfläche 10 vorbereitet. Dies kann zum Beispiel so erfolgen, dass an einer zentralen Schweißstation 28 die Einzelrohre 14 miteinander verbunden werden und die so nach und nach verlängerte Rohrleitung 1 von einer Winde 29 auf die über der Verlegelinie 6 aufgestellten Rollenböcke 13 gezogen wird. Parallel zu diesem Arbeitsschritt kann die Startgrube 5 erstellt werden.
   Fig. 1 b: Anschließend kann das Verlegefahrzeug 9 mit der vertikalen Verbindungsvorrichtung 8 sowie dem Bohrkopf 3 an der Startgrube 5 positioniert und mit der im elastischen Bogen zugeführten Rohrleitung 1 verbunden werden.
   Fig. 1c: Das Verlegefahrzeug 9 bewegt sich sodann über der Verlegelinie 6 entlang in Richtung Zielgrube 7, wobei die für den Bohr- und Verlegevorgang erforderlichen Kräfte (Andruckkraft für den Bohrkopf 3, Reibung an der Rohrleitung 1) zunächst alleine vom Verlegefahrzeug 9 aufgebracht werden. Je nach Kraftbedarf kann optional eine Vorschubeinrichtung 12 in der Startgrube 5 positioniert werden, die zusätzliche Axialkräfte in Verlegerichtung auf die Rohrleitung 1 aufbringt. Die Positionierung des Verlegefahrzeugs 9 kann bei hohen Genauigkeitsanforderungen entweder über GPS oder Laservermessungssystem erfolgen. Die zur Steuerung des Bohrkopfes 3 notwendigen Steuerimpulse können entweder direkt durch das Verlegefahrzeug 9 erzeugt und übertragen werden (z.B. durch Richtungsänderungen oder eine an Hydraulikzylindern geführte vertikale Verbindungsvorrichtung 8) oder aber auch durch Steuerelemente (z.B. Hydraulikzylinder) im Bohrkopf selbst (analog der bekannten Steuerung von Rohrvortriebsmaschinen).
   Fig. 1d: Nachdem das Verlegefahrzeug 9 an der Zielgrube 7 angekommen ist, wird der Bohrkopf 3 von der Rohrleitung 1 getrennt. Die bisherige Startgrube 5 wird nun zur neuen Zielgrube 7, während gleichzeitig eine neue Startgrube 5 erstellt wird.
   Fig. 1 e: Die beiden im Boden 2 verlegten Rohrleitungen 1 werden nun im Bereich der bisherigen Zielgrube 7 mittels eines Verbindungsrohrs 30 miteinander verbunden. Das Verlegefahrzeug 9 wird zusammen mit der vertikalen Verbindungsvorrichtung 8 und dem Bohrkopf 3 zur nächsten Startgrube 5 umgesetzt.
   Fig. 1f: Nun kann die Rohrverlegung in der in Fig. 1c beschriebenen Art und Weise zwischen der neuen Startgrube 5 und der neuen Zielgrube 7 (ehemals Startgrube 5) erfolgen. Die vorherige Zielgrube 7 wird verfüllt.

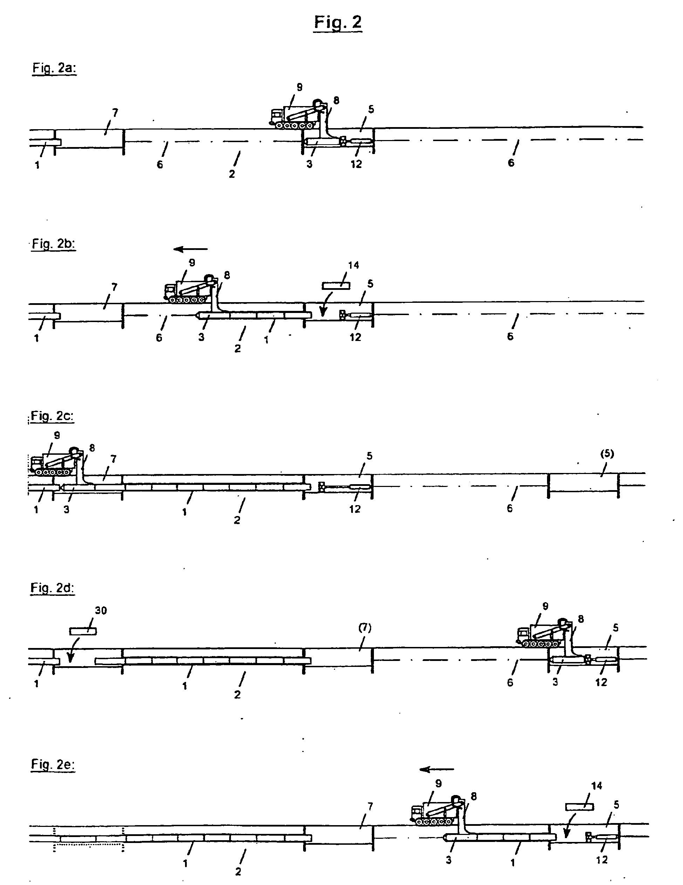

In Fig. 2 ist die prinzipielle Einsatzmöglichkeit des erfindungsgemäßen Verfahrens sowie dabei einsetzbarer Vorrichtungen gezeigt, wobei diese Variante vorzugsweise dann zum Einsatz kommen soll, wenn eine hohe Bohrgeschwindigkeit wegen günstiger Bodenbedingungen erreicht werden kann und die für die Verlegung vorgesehenen Rohre nur kurze Koppelungszeiten erforderlich machen. Diese Konstellation ergibt sich beispielsweise bei der Verlegung von Gussrohren in sandigem Boden.
   Fig. 2a: Zunächst wird das Verlegefahrzeug 9 mit der vertikalen Verbindungsvorrichtung 8 sowie dem Bohrkopf 3 an der Startgrube 5 positioniert und die für die Verlegung nicht zugfester bzw. nur gering mit Zugkraft belastbarer Rohre (z.B. Gussrohre mit Muffenverbindung) erforderliche Vorschubeinrichtung 12 in der Startgrube 5 eingebaut.
   Fig: 2b: Danach bewegt sich das Verlegefahrzeug 9 über der Verlegelinie 6 entlang in Richtung Zielgrube 7, wobei die für den Bohr- und Verlegevorgang erforderlichen Kräfte (Andruckkraft für den Bohrkopf 3, Reibung an der Rohrleitung 1) zusammen vom Verlegefahrzeug 9 sowie der Vorschubeinrichtung 12 aufgebracht werden. Die Positionierung des Verlegefahrzeugs 9 kann bei hohen Genauigkeitsanforderungen entweder über GPS oder Laservermessungssystem erfolgen. Die zur Steuerung des Bohrkopfes 3 notwendigen Steuerimpulse können entweder direkt durch das Verlegefahrzeug 9 erzeugt und übertragen werden (z.B. durch Richtungsänderungen oder eine an Hydraulikzylindern geführte vertikale Verbindungsvorrichtung 8) oder aber auch durch Steuerelemente (z.B. Hydraulikzylinder) im Bohrkopf selbst (analog der bekannten Steuerung von Rohrvortriebsmaschinen). In der Startgrube 5 werden Einzelrohre 14 nachgesetzt und von der Vorschubvorrichtung 12 in den Boden gepresst. Während des Einlegevorgangs wird der Bohrvorgang kurzfristig unterbrochen.
   Fig. 2c: Nachdem das Verlegefahrzeug 9 an der Zielgrube 7 angekommen ist, wird der Bohrkopf 3 von der Rohrleitung 1 getrennt und das Verlegefahrzeug 9 zusammen mit der vertikalen Verbindungsvorrichtung 8 und dem Bohrkopf 3 zur nächsten Startgrube umgesetzt. Die bisherige Startgrube 5 wird nun zur neuen Zielgrube 7.
   Fig. 2d: Die beiden im Boden 2 verlegten Rohrleitungen 1 werden nun im Bereich der bisherigen Zielgrube 7 mittels eines Verbindungsrohrs 30 miteinander verbunden. Das Verlegefahrzeug 9 wird zusammen mit der vertikalen Verbindungsvorrichtung 8 und dem Bohrkopf 3 zur nächsten Startgrube 5 umgesetzt.
   Fig. 2e: Nun kann die Rohrverlegung in der in Fig. 2b beschriebenen Art und Weise zwischen der neuen Startgrube 5 und der neuen Zielgrube 7 (ehemals Startgrube 5) erfolgen. Die vorherige Zielgrube 7 wird verfüllt.

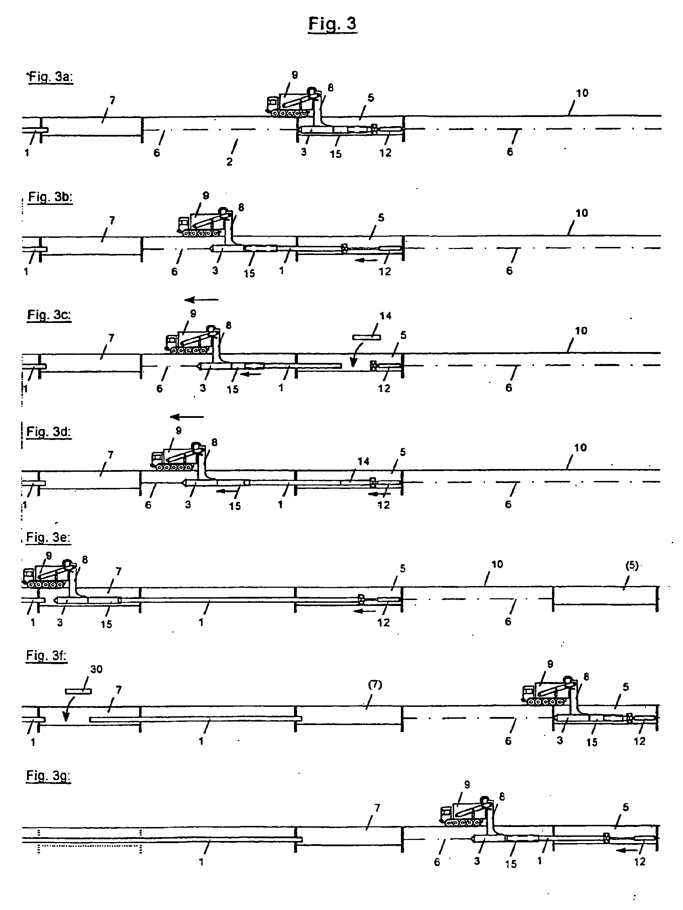

In Fig. 3 ist die prinzipielle Einsatzmöglichkeit des erfindungsgemäßen Verfahrens sowie dabei einsetzbarer Vorrichtungen gezeigt, wobei diese Variante vorzugsweise dann zum Einsatz kommen soll, wenn eine hohe Bohrgeschwindigkeit wegen ungünstiger Bodenbedingungen nicht erreicht werden kann und die für die Verlegung vorgesehenen Rohre lange Koppelungszeiten erforderlich machen. Diese Konstellation ergibt sich beispielsweise bei der Verlegung von Stahlrohren in felsigem Boden.
   Fig. 3a: Zunächst wird das Verlegefahrzeug 9 mit der vertikalen Verbindungsvorrichtung 8 sowie dem Bohrkopf 3 und dem Hüllrohr 15 an der Startgrube 5 positioniert und die für den Vorschub der Rohrleitung 1 erforderliche Vorschubeinrichtung 12 in der Startgrube 5 eingebaut.
   Fig. 3b: Danach bewegt sich das Verlegefahrzeug 9 über der Verlegelinie 6 entlang in Richtung Zielgrube 7, wobei die für den Bohrvorgang erforderliche Andruckkraft für den Bohrkopf 3 sowie die zur Überwindung der Reibung an dem Hüllrohr 15 erforderliche Kraft vom Verlegefahrzeug 9 und die zur Überwindung der Reibung an der Rohrleitung 1 erforderliche Kraft von der Vorschubeinrichtung 12 aufgebracht werden. Das Hüllrohr kann z.B. die doppelte Länge der Einzelrohre 14 aufweisen. Zu Beginn eines Arbeitszyklus wird nun von der Vorschubeinrichtung 12 die Rohrleitung 1 möglichst weit in das Hüllrohr 15 geschoben. Die Positionierung des Verlegefahrzeugs 9 kann bei hohen Genauigkeitsanforderungen wiederum entweder über GPS oder Laservermessungssystem erfolgen. Die zur Steuerung des Bohrkopfes 3 notwendigen Steuerimpulse können entweder direkt durch das Verlegefahrzeug 9 erzeugt und übertragen werden (z.B. durch Richtungsänderungen oder eine an Hydraulikzylindern geführte vertikale Verbindungsvorrichtung 8) oder aber auch durch Steuerelemente (z.B. Hydraulikzylinder) im Bohrkopf selbst (analog der bekannten Steuerung von Rohrvortriebsmaschinen).
   Fig. 3c: Während der Bohrvorgang kontinuierlich weiterläuft und dabei das Hüllrohr 15 langsam in Richtung der Zielgrube 7 über die Rohrleitung 1 bewegt wird, kann gleichzeitig in der Startgrube 5 ein weiteres Einzelrohr 14 mit der Rohrleitung 1 verbunden werden, ohne dass die Rohrleitung 1 sich selbst bewegt. Diese statischen Bedingungen sind z.B. beim Verschweißen von Rohren erforderlich, um die notwendige hohe Qualität der Schweißnähte zu ermöglichen.
   Fig. 3d: Der Verbindungsvorgang des Einzelrohrs 14 mit der Rohrleitung 1 ist abgeschlossen, bevor das Hüllrohr 15 vollständig über die Rohrleitung 1 bewegt wurde, so dass die Rohrleitung 1 weiterhin beim erneuten Vorschub durch die Vorschubeinrichtung 12 durch das Hüllrohr 15 geführt werden kann. Dann ist wiederum der in Fig. 3b gezeigte Zustand erreicht und der beschriebene Arbeitszyklus kann wiederholt werden, bis das Verlegefahrzeug 9 an der Zielgrube 7 angekommen ist.
   Fig. 3e: Nachdem das Verlegefahrzeug 9 an der Zielgrube 7 angekommen ist, wird der Bohrkopf 3 sowie das Hüllrohr 15 aus der Zielgrube 7 entfernt. Die bisherige Startgrube 5 wird nun zur neuen Zielgrube 7.
   Fig. 3f: Die beiden im Boden 2 verlegten Rohrleitungen 1 können nun im Bereich der bisherigen Zielgrube 7 mittels eines Verbindungsrohrs 30 miteinander verbunden werden. Das Verlegefahrzeug 9 wird zusammen mit der vertikalen Verbindungsvorrichtung 8, dem Bohrkopf 3 und dem Hüllrohr 15 an der neuen Startgrube 5 vorbereitet.
   Fig. 3g: Nun kann die Rohrverlegung in der in den Fig. 3b bis 3f beschriebenen Art und Weise zwischen der neuen Startgrube 5 und der neuen Zielgrube 7 (ehemals Startgrube 5) erfolgen. Die vorherige Zielgrube 7 wird verfüllt.

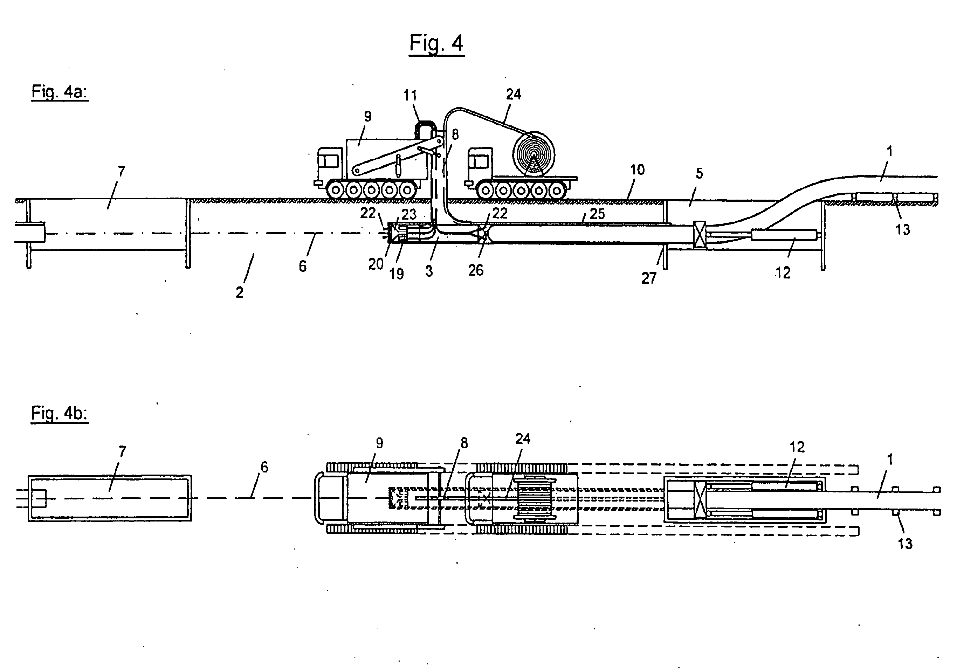

In Fig. 4 ist ein bevorzugter Anwendungsfall dargestellt, bei dem neben der Rohrleitung 1 simultan ein Kabelschutzrohr 24 oberhalb der Rohrleitung 1 mitverlegt wird.
   Fig. 4a: In einem bevorzugten Anwendungsfall befindet sich das Kabelschutzrohr 24 aufgetrommelt auf einem separaten Fahrzeug und wird dann während des Verlegevorgangs durch die vertikale Verbindungsvorrichtung 8 oberhalb der Rohrleitung 1 im Boden 2 abgelegt. In einer weiteren bevorzugten Ausführungsform kann die horizontale Verbindungsvorrichtung 26 gelenkig sowie zug- und druckfest ausgelegt werden, wodurch die Steuerbarkeit des Bohrkopfes 3 optimiert wird und gleichzeitig vom Verlegefahrzeug 9 Zugkräfte auf die Rohrleitung 1 übertragen werden können bzw. von der Vorschubeinrichtung 12 Druckkräfte auf den Bohrkopf 3 ausgeübt werden können. Der Antrieb des Schneidrads 20 am Bohrkopf 3 kann über Motor-Getriebe-Einheiten 19 erfolgen, wie sie ebenso wie ein optionaler Brecher 23 zur Zerkleinerung des Bohrkleins im Bohrkopf 3 aus dem Rohrvortrieb bekannt sind. Der vom Schneidrad 20 gelöste Boden wird in einem bevorzugten Anwendungsfall durch die vertikale Verbindungsvorrichtung 8 nach über Tage gefördert und abtransportiert. Der während des Bohr- und Verlegevorgangs entstehende Ringspalt 25 zwischen der Wand des Bohrlochs 4 und der Rohrleitung 1 kann über Düsen 22 im Bohrkopf 3 mit reibungsmindernder Bohrspülung 21 aufgefüllt werden, um die Verlegekräfte zu minimieren und den Schutz der Rohrleitung gegen mechanische Beschädigung zu erhöhen.
   Fig. 4b: In einem bevorzugten Anwendungsfall wird die Spurweite des Verlegefahrzeugs 9 so ausgelegt, dass das Verlegefahrzeug 9 über die relativ schmale Startgrube 5 bzw. Zielgrube 7 fahren kann. An der Oberfläche ist für kurze Zeit lediglich der schmale Schlitz zu erkennen, den die vertikale Verbindungsvorrichtung 8 erzeugt.

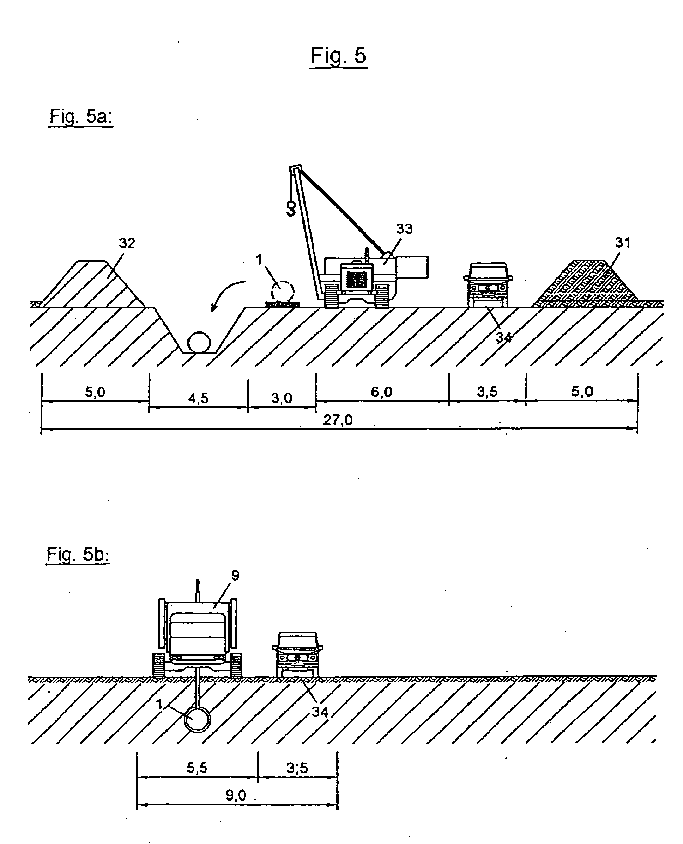

In Fig. 5 zeigt beispielhaft für eine große Stahlleitung den unterschiedlichen Trassenbedarf bei Einsatz der konventionellen Verlegetechnik im offenen Rohrgraben sowie bei Einsatz des Verfahrens.
   Fig. 5a: Bei der konventionellen Rohrverlegung muss zunächst der Mutterboden 31 abgeschoben und separat gelagert werden. Anschließend wird der Rohrgraben ausgehoben und der Aushub 32 ebenfalls seitlich gelagert. Danach wird die Rohrleitung 1 vorbereitet und danach von Rohrverlegern 33 in den Graben abgesenkt. Neben den Rohrverlegern ist eine Fahrspur für Hilfsfahrzeuge 34 vorzusehen. Bei einer Stahlrohrleitung des Durchmessers 1200 mm ist von einer Gesamtbreite der Trasse von etwa 27 m auszugehen.
   Fig. 5b: Beim erfindungsgemäßen Verfahren wird für das Verlegefahrzeug 9 ein kleinerer Arbeitsstreifen als für einen Rohrverleger 33 benötigt. Identisch ist demgegenüber der Flächenbedarf für die Fahrspur der Hilfsfahrzeuge 34. Weitere Flächen werden nicht benötigt. Die Gesamtbreite der Trasse beträgt somit beim erfindungsgemäßen Verfahren etwa 9 m und damit nur ein Drittel derjenigen Trassenbreite bei Einsatz des konventionellen Verfahrens.

### Weitere Ausführungsbeispiele:

Ausführungsbeispiel 1 ist ein Verfahren zum Verlegen von Rohrleitungen im Boden, wobei eine Rohrleitung (1) im Boden (2) verlegt wird, indem von einem Bohrkopf (3) am Anfang einer Rohrleitung (1) ein Bohrloch (4) von einer Startgrube (5) entlang einer Verlegelinie (6) zu einer Zielgrube (7) erstellt wird und der vom Bohrkopf (3) gelöste Boden aus dem Bohrloch (4) entnommen und nach über Tage gefördert wird, dadurch gekennzeichnet, dass der Bohrkopf (3) über eine schmale Verbindungsvorrichtung (8) mit einem Verlegefahrzeug (9) an der Geländeoberfläche (10) verbunden ist und die erforderliche Kraft für den Bohr- und Verlegevorgang vom Verlegefahrzeug (9) und/oder einer Vorschubeinrichtung (12) in der Startgrube (5) aufgebracht wird.

Ausführungsbeispiel 2 ist eine Verfahren nach Ausführungsbeispiel 1, dadurch gekennzeichnet, dass die Verbindungsvorrichtung (8) eine vertikale Verbindungsvorrichtung (8) ist, die im wesentlichen vertikal ausgerichtet ist.

Ausführungsbeispiel 3 ist ein Verfahren nach Ausführungsbeispiel 1 oder 2, dadurch gekennzeichnet, dass der Bohrkopf (3) ein Schneidrad (20) aufweist, das während des Bohrvorgangs zentrisch um die Verlegelinie (6) rotiert, wobei der vom Bohrkopf (3) gelöste Boden von dem Schneidrad (20) gelöst wird.

Ausführungsbeispiel 4 ist ein Verfahren nach einem der Ausführungsbeispiele 1 bis 3, dadurch gekennzeichnet, dass die Verbindungsvorrichtung (8) im Bereich des Bodens eine Breite im Bereich von etwa 100 mm bis etwa 200 mm aufweist.

Ausführungsbeispiel 5 ist ein Verfahren nach einem der Ausführungsbeispiele 1 bis 4, dadurch gekennzeichnet, dass der vom Bohrkopf (3) gelöste Boden über die Verbindungsvorrichtung (8) nach über Tage gefördert wird.

Ausführungsbeispiel 6 ist ein Verfahren nach einem der Ausführungsbeispiele 1 bis 5, dadurch gekennzeichnet, dass die Rohrleitung (1) in einem Stück an der Geländeoberfläche (10) vorgefertigt und auf Rollenböcken (13) gelagert wird.

Ausführungsbeispiel 7 ist ein Verfahren nach einem der Ausführungsbeispiele 1 bis 5, dadurch gekennzeichnet, dass die Rohrleitung (1) in der Startgrube (5) während des Verlegevorgangs aus Einzelrohren (14) gefertigt wird.

Ausführungsbeispiel 8 ist ein Verfahren nach Ausführungsbeispiel 7, dadurch gekennzeichnet, dass der Bohrkopf (3) an einem Hüllrohr (15) befestigt ist, in dem sich mindestens ein Teil der Rohrleitung (1) befindet und diese Rohrleitung (1) unabhängig von der Bewegung des Hüllrohrs (15) im Hüllrohr (15) bzw. im Boden (2) bewegt werden kann und dabei durch das Hüllrohr (15) geführt wird.

Ausführungsbeispiel 9 ist ein Verfahren nach einem der Ausführungsbeispiele 1 bis 8, dadurch gekennzeichnet, dass simultan mit dem Bohrvorgang ein Kabelschutzrohr (24) oberhalb der Rohrleitung (1) verlegt wird.

Ausführungsbeispiel 10 ist ein Verfahren nach einem der Ausführungsbeispiele 1 bis 9, dadurch gekennzeichnet, dass der Durchmesser des Bohrkopfes (3) geringfügig größer ist als derjenige der Rohrleitung (1) bzw. des Hüllrohres (15) und gleichzeitig wesentlich größer ist als die maximale Breite der Verbindungsvorrichtung (8) im Bereich des Bodens (2).

Ausführungsbeispiel 11 ist ein Verfahren einem der Ausführungsbeispiele 1 bis 10, dadurch gekennzeichnet, dass die Steuerung des Bohrkopfes (3) durch Steuerelemente (16) im bzw. am Bohrkopf (3) ausgeführt wird.

Ausführungsbeispiel 12 ist ein Verfahren nach einem der Ausführungsbeispiele 1 bis 11 in Verbindung mit Ausführungsbeispiel 3, dadurch gekennzeichnet, dass das Schneidrad (20) des Bohrkopfes (3) von mindestens einer im Bohrkopf (3) installierten Motor-Getriebe-Einheit (19) angetrieben wird und/oder am Schneidrad (20) Bohrspülung (21) durch Düsen (22) austritt und/oder hinter dem Schneidrad (20) ein Brecher (23) installiert ist.

Ausführungsbeispiel 13 Verfahren nach einem der Ausführungsbeispiele 1 bis 12, dadurch gekennzeichnet, dass über Düsen (22) am hinteren Ende des Bohrkopfes (3) der Ringspalt (25) um die Rohrleitung (1) mit einer reibungsmindernden Flüssigkeit aufgefüllt wird.

Ausführungsbeispiel 14 ist ein Verfahren nach einem der Ausführungsbeispiele 1 bis 13, dadurch gekennzeichnet, dass die Steuerung des Bohrkopfes (3) durch Steuerelemente (17) in bzw. an der Verbindungsvorrichtung (8) ausgeführt wird.

Ausführungsbeispiel 15 ist ein Verfahren nach einem der Ausführungsbeispiele 1 bis 14, dadurch gekennzeichnet, dass die für den Betrieb des Bohrkopfes (3) erforderlichen Steuer-, Ver- und Entsorgungsleitungen (11) vom Verlegefahrzeug (9) durch die Verbindungsvorrichtung (8) zum Bohrkopf (3) geführt werden.

Ausführungsbeispiel 16 ist ein Verfahren nach einem der Ausführungsbeispiele 1 bis 15, dadurch gekennzeichnet, dass die Verbindungsvorrichtung (8) eine schmale Stahlkonstruktion aufweist, die den in Verlegerichtung vor der Verbindungsvorrichtung (8) anstehenden Boden (2) im Wesentlichen seitlich verdrängt.

Ausführungsbeispiel 17 Verfahren nach einem der Ausführungsbeispiele 1 bis 16, dadurch gekennzeichnet, dass die Verbindungsvorrichtung (8) eine Schneidvorrichtung aufweist, die den in Verlegerichtung vor der Verbindungsvorrichtung (8) anstehenden Boden (2) löst und nach über Tage fördert.

Ausführungsbeispiel 18 ist ein Verfahren nach einem der Ausführungsbeispiele 1 bis 17, dadurch gekennzeichnet, dass die Steuerung des Bohrkopfes (3) über die Verbindungsvorrichtung (8) durch Steuerelemente (18) am Verlegefahrzeug (9) ausgeführt wird.

Ausführungsbeispiel 19 ist ein Verfahren nach einem der Ausführungsbeispiele 1 bis 18, dadurch gekennzeichnet, dass eine horizontale Verbindungsvorrichtung (26) als flexible Verbindung vorgesehen ist, die den Bohrkopf (3) und die Rohrleitung (1) bzw. den Bohrkopf (3) und das Hüllrohr (15) zug- und druckfest miteinander verbindet.

Ausführungsbeispiel 20 ist ein Verfahren nach einem der Ausführungsbeispiele 1 bis 19, dadurch gekennzeichnet, dass nach Beginn des Bohr- und Verlegevorgangs der Ringspalt (25) zwischen Bohrloch (4) und Rohrleitung (1) gegenüber der Startgrube (5) gegen Flüssigkeitszutritt mittels einer Dichtung (27) abgedichtet wird.

Ausführungsbeispiel 21 ist ein Verlegefahrzeug mit einer Verbindungsvorrichtung (8), das für die Durchführung des Verfahrens nach einem der Ausführungsbeispiele 1 bis 20 eingerichtet ist.

Ausführungsbeispiel 22 ist ein Verlegefahrzeug nach Ausführungsbeispiel 21, dadurch gekennzeichnet, dass die Verbindungsvorrichtung (8) eine schmale Stahlkonstruktion aufweist, die dazu eingerichtet ist, den in Verlegerichtung vor der Verbindungsvorrichtung (8) anstehenden Boden (2) im Wesentlichen seitlich zu verdrängen.

Ausführungsbeispiel 23 ist ein Verlegefahrzeug nach Ausführungsbeispiel 21 oder 22, dadurch gekennzeichnet, dass die Verbindungsvorrichtung (8) eine Schneidvorrichtung aufweist, die dazu eingerichtet ist, den in Verlegerichtung vor der Verbindungsvorrichtung (8) anstehenden Boden (2) zu lösen und nach über Tage zu fördern.

Ausführungsbeispiel 24 ist ein Verlegefahrzeug nach einem der Ausführungsbeispiele 21 bis 23, dadurch gekennzeichnet, dass die Verbindungsvorrichtung (8) eine Fördereinrichtung aufweist, die dazu eingerichtet ist, den vom Bohrkopf (3) gelösten Boden nach über Tage zu fördern.

Ausführungsbeispiel 25 ist ein Verlegefahrzeug nach einem der Ausführungsbeispiele 21 bis 24, dadurch gekennzeichnet, dass die Verbindungsvorrichtung (8) im Bereich des Bodens (2) eine Breite im Bereich von etwa 100 mm bis etwa 200 mm aufweist.

### Bezugszeichentiste:

- 1: Rohrleitung
- 2: Boden
- 3: Bohrkopf
- 4: Bohrloch
- 5: Startgrube
- 6: Verlegelinie
- 7: Zielgrube
- 8: Vertikale Verbindungsvorrichtung
- 9: Verlegefahrzeug
- 10: Geländeoberfläche
- 11: Steuer-, Ver- und Entsorgungsleitungen
- 12: Vorschubeinrichtung
- 13: Rollenbock
- 14: Einzelrohr
- 15: Hüllrohr
- 16: Steuerelemente am Bohrkopf
- 17: Steuerelemente an der vertikalen Verbindungsvorrichtung
- 18: Steuerelemente am Verlegefahrzeug
- 19: Motor-Getriebe-Einheit
- 20: Schneidrad
- 21: Bohrspülung
- 22: Düsen
- 23: Brecher
- 24: Kabelschutzrohr

- 25: Ringspalt
- 26: Horizontale Verbindungsvorrichtung
- 27: Dichtung
- 28: Schweißstation
- 29: Winde
- 30: Verbindungsrohr
- 31: Mutterboden
- 32: Rohrgrabenaushub
- 33: Rohrverleger
- 34: Fahrspur für Hilfsfahrzeuge

## Patentansprüche

1. Bohrvorrichtung zum Verlegen von Rohrleitungen (1) im Boden (2) mit einem Bohrkopf (3) zum Bohren eines Bohrlochs von einer Startgrube (5) entlang einer Verlegelinie (6) zu einer Zielgrube (7), wobei der Bohrkopf (3) ein Schneidrad (20) aufweist, wobei der Bohrkopf (3) mit einer schmalen Verbindungsvorrichtung (8) verbunden ist, über die eine Verbindung mit einem Verlegefahrzeug (9) an der Geländeoberfläche (10) herstellbar ist, wobei die Verbindungsvorrichtung so ausgeführt ist, dass die erforderliche Kraft für den Bohr- und Verlegevorgang vom Verlegefahrzeug (9) auf der Bohrkopf (3) übertragbar ist, **dadurch gekennzeichnet, dass** die Verbindungsvorrichtung (8) eine Schneidvorrichtung aufweist, die den in Verlegerichtung vor der Verbindungsvorrichtung (8) anstehenden Boden (2) löst und nach über Tage fördert, und dass die Bohrvorrichtung zum Verlegen von Rohrleitungen mit einem Außen-Durchmesser >400mm vorgesehen ist.

2. Bohrvorrichtung nach Anspruch 1, **dadurch gekennzeichnet, dass** das Schneidrad (20) während des Bohrvorgangs zentrisch um die Verlegelinie (6) rotiert, wodurch der Boden von dem Schneidrad (20) gelöst wird.

3. Bohrvorrichtung nach Anspruch 1 oder 2, **dadurch gekennzeichnet dass** die Verbindungsvorrichtung (8) eine Fördereinrichtung aufweist, die dazu eingerichtet ist, den vom Bohrkopf (3) gelösten Boden nach über Tage zu fördern.

4. Bohrvorrichtung nach einem der Ansprüche 1 bis 3, **dadurch gekennzeichnet, dass** die Verbindungsvorrichtung (8) eine vertikale Verbindungsvorrichtung (8) ist, die im Wesentlichen vertikal ausgerichtet ist.

5. Bohrvorrichtung nach einem der Ansprüche 1 bis 4, **dadurch gekennzeichnet, dass** die Verbindungsvorrichtung (8) im Bereich des Bodens (2) eine Breite im Bereich von etwa 100 mm bis etwa 200 mm aufweist.

6. Bohrvorrichtung nach einem der Ansprüche 1 bis 5, **dadurch gekennzeichnet**, die Steuerung des Bohrkopfes (3) durch Steuerelemente (16) im bzw. am Bohrkopf (3) oder durch Steuerelemente in bzw. an der Verbindungsvorrichtung (8) ausführbar ist, und/oder dass die Verbindungsvorrichtung (8) so ausgeführt ist, dass die Steuerung des Bohrkopfes (3) durch Steuerelemente (18) am Verlegefahrzeug (9) ausführbar ist.

7. Bohrvorrichtung nach einem der Ansprüche 1 bis 6, **dadurch gekennzeichnet, dass** das Schneidrad (20) des Bohrkopfes (3) von mindestens einer im Bohrkopf (3) installierten Motor-Getriebe-Einheit (19) angetrieben wird und/oder am Schneidrad (20) Bohrspülung (21) durch Düsen (22) austritt und/oder hinter dem Schneidrad (20) ein Brecher (23) installiert ist.

8. Bohrvorrichtung nach einem der Ansprüche 1 bis 7, **dadurch gekennzeichnet, dass** Düsen (22) am hinteren Ende des Bohrkopfes (3) vorgesehen sind, über die ein Ringspalt (25) zwischen der Rohrleitung (1) und der Bohrlochwand mit einer reibungsmindernden Flüssigkeit auffüllbar ist.

9. Bohrvorrichtung nach einem der Ansprüche 1 bis 8, **dadurch gekennzeichnet, dass** eine horizontale Verbindungsvorrichtung (26) als flexible Verbindung vorgesehen ist, die den Bohrkopf (3) und die Rohrleitung (1) bzw. den Bohrkopf (3) und ein Hüllrohr (15) zug- und druckfest miteinander verbindet.

10. Bohrvorrichtung nach einem der Ansprüche 1 bis 9, **dadurch gekennzeichnet, dass** die für den Betrieb des Bohrkopfes (3) erforderlichen Steuer-, Ver- und Entsorgungsleitungen (11) vom Verlegefahrzeug (9) durch die Verbindungsvorrichtung (8) zum Bohrkopf (3) geführt sind.

11. Bohrvorrichtung nach einem der Ansprüche 1 bis 10, **dadurch gekennzeichnet, dass** es sich bei der Schneidvorrichtung an der Verbindungsvorrichtung um eine Fräskette handelt.

12. Verlegefahrzeug mit einer Bohrvorrichtung nach einem der Ansprüche 1 bis 11.

## Claims

1. Drilling device for laying pipelines (1) in the ground (2), comprising a drilling head (3) for drilling a drill hole from a starting pit (5) along a laying line (6) to a target pit (7), wherein the drilling head (3) has a cutting wheel (20), wherein the drilling head (3) is connected to a narrow connecting device (8), via which a connection to a laying vehicle (9) on the land surface (10) can be produced, wherein the connecting device is embodied in such a way that the force required for the drilling and laying operation can be transmitted from the laying vehicle (9) to the drilling head (3), **characterized in that** the connecting device (8) has a cutting device which loosens the soil (2) in place in front of the connecting device (8) in the laying direction and conveys it to the surface, and **in that** the drilling device is provided for laying pipelines having an outside diameter > 400 mm.

2. Drilling device according to Claim 1, **characterized in that** the cutting wheel (20) rotates concentrically about the laying line (6) during the drilling operation, as a result of which the soil is loosened by the cutting wheel (20).

3. Drilling device according to Claim 1 or 2, **characterized in that** the connecting device (8) has a conveyor which is set up for conveying the soil loosened by the drilling head (3) to the surface.

4. Drilling device according to one of Claims 1 to 3, **characterized in that** the connecting device (8) is a vertical connecting device (8) which is oriented substantially vertically.

5. Drilling device according to one of Claims 1 to 4, **characterized in that** the connecting device (8) has a width within the range of about 100 mm to about 200 mm in the region of the ground (2).

6. Drilling device according to one of Claims 1 to 5, **characterized in that** the drilling head (3) can be controlled by control elements (16) in or on the drilling head (3) or by control elements in or on the connecting device (8), and/or **in that** the connecting device (8) is embodied in such a way that the drilling head (3) can be controlled by control elements (18) on the laying vehicle (9).

7. Drilling device according to one of Claims 1 to 6, **characterized in that** the cutting wheel (20) of the drilling head (3) is driven by at least one motor/gearing unit (19) installed in the drilling head (3), and/or drilling mud (21) discharges through nozzles (22) at the cutting wheel (20), and/or a breaker (23) is installed behind the cutting wheel (20).

8. Drilling device according to one of Claims 1 to 7, **characterized in that** nozzles (22) are provided at the rear end of the drilling head (3), via which nozzles (22) an annular gap (25) between the pipeline (1) and the drill hole wall can be filled with a friction-reducing liquid.

9. Drilling device according to one of Claims 1 to 8, **characterized in that** a horizontal connecting device (26) is provided as a flexible connection which connects together the drilling head (3) and the pipeline (1) or the drilling head (3) and a casing tube (15) in a manner resistant to tension and compression.

10. Drilling device according to one of Claims 1 to 9, **characterized in that** the control, supply and disposal lines (11) required for the operation of the drilling head (3) are run from the laying vehicle (9) through the connecting device (8) to the drilling head (3).

11. Drilling device according to one of Claims 1 to 10, **characterized in that** the cutting device on the connecting device is a milling chain.

12. Laying vehicle having a drilling device as claimed in one of Claims 1 to 11.

## Revendications

1. Dispositif de forage pour la pose de conduites tubulaires (1) dans le sol (2), comprenant une tête de forage (3) pour forer un trou de forage depuis une fosse de départ (5) le long d'une ligne de pose (6) jusqu'à une fosse cible (7), la tête de forage (3) présentant une roue de coupe (20), la tête de forage (3) étant connectée à un dispositif de connexion étroit (8) par le biais duquel une connexion peut être établie avec un véhicule de pose (9) à la surface du terrain (10), le dispositif de connexion étant réalisé de telle sorte que la force requise pour l'opération de forage et de pose puisse être transmise du véhicule de pose (9) à la tête de forage (3), **caractérisé en ce que** le dispositif de connexion (8) présente un dispositif de coupe qui détache le sol (2) se trouvant devant le dispositif de connexion (8) dans la direction de pose et qui le transporte à la surface, et **en ce que** le dispositif de forage est prévu pour poser des conduites tubulaires ayant un diamètre extérieur > 400 mm.

2. Dispositif de forage selon la revendication 1, **caractérisé en ce que** la roue de coupe (20) tourne centralement autour de la ligne de pose (6) pendant l'opération de forage, de sorte que le sol soit détaché de la roue de coupe (20).

3. Dispositif de forage selon la revendication 1 ou 2, **caractérisé en ce que** le dispositif de connexion (8) présente un dispositif de transport qui est prévu pour transporter à la surface le sol détaché par la tête de forage (3).

4. Dispositif de forage selon l'une quelconque des revendications 1 à 3, **caractérisé en ce que** le dispositif de connexion (8) est un dispositif de connexion vertical (8) qui est orienté essentiellement verticalement.

5. Dispositif de forage selon l'une quelconque des revendications 1 à 4, **caractérisé en ce que** le dispositif de connexion (8) présente dans la région du sol (2) une largeur de l'ordre d'environ 100 mm à environ 200 mm.

6. Dispositif de forage selon l'une quelconque des revendications 1 à 5, **caractérisé en ce que** la commande de la tête de forage (3) peut s'effectuer par des éléments de commande (16) dans ou sur la tête de forage (3), ou par des éléments de commande dans ou sur le dispositif de connexion (8), et/ou **en ce que** le dispositif de connexion (8) est réalisé de telle sorte que la commande de la tête de forage (3) puisse être effectuée par des éléments de commande (18) sur le véhicule de pose (9).

7. Dispositif de forage selon l'une quelconque des revendications 1 à 6, **caractérisé en ce que** la roue de coupe (20) de la tête de forage (3) est entraînée par au moins une unité moteur-transmission (19) installée dans la tête de forage (3), et/ou **en ce qu'**un fluide de forage (21) sort à travers des buses (22) au niveau de la roue de coupe (20) et/ou **en ce qu'**un concasseur (23) est installé derrière la roue de coupe (20).

8. Dispositif de forage selon l'une quelconque des revendications 1 à 7, **caractérisé en ce que** des buses (22) sont prévues à l'extrémité arrière de la tête de forage (3), par le biais desquelles une fente annulaire (25) entre la conduite tubulaire (1) et la paroi du trou de forage peut être remplie de liquide réduisant les frottements.

9. Dispositif de forage selon l'une quelconque des revendications 1 à 8, **caractérisé en ce qu'**un dispositif de connexion horizontal (26) est prévu sous forme de connexion flexible, qui relie entre elles de manière résistant à la traction et à la pression la tête de forage (3) et la conduite tubulaire (1) ou la tête de forage (3) et un tube formant gaine (15).

10. Dispositif de forage selon l'une quelconque des revendications 1 à 9, **caractérisé en ce que** les conduites de commande, d'alimentation et de décharge (11) requises pour le fonctionnement de la tête de forage (3) sont guidées par le véhicule de pose (9) à travers le dispositif de connexion (8) jusqu'à la tête de forage (3).

11. Dispositif de forage selon l'une quelconque des revendications 1 à 10, **caractérisé en ce que** le dispositif de coupe sur le dispositif de connexion est une chaîne de fraisage.

12. Véhicule de pose comprenant un dispositif de forage selon l'une quelconque des revendications 1 à 11.
